(19) Europäisches Patentamt
European Patent Office
Office européen des brevets

(11) **EP 4 219 418 A1**

(12) **EUROPEAN PATENT APPLICATION**
published in accordance with Art. 153(4) EPC

(43) Date of publication:
**02.08.2023 Bulletin 2023/31**

(21) Application number: **21942667.3**

(22) Date of filing: **13.10.2021**

(51) International Patent Classification (IPC):
**C03B 37/029** (2006.01)   **C03C 25/105** (2018.01)

(86) International application number:
**PCT/CN2021/123420**

(87) International publication number:
**WO 2022/247102 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2021 CN 202110580918**

(71) Applicants:
• **Zhongtian Technology Fiber Potics Co., Ltd
Economic Development Zone
Nantong City
Jiangsu 226000 (CN)**
• **Jiangdong Technology Co., Ltd.
Nantong, Jiangsu 226400 (CN)**
• **Jiangsu Zhongtian Technology Co., Ltd.
Nantong, Jiangsu 226463 (CN)**

(72) Inventors:
• **ZHU, Qiansheng
Nantong, Jiangsu 226463 (CN)**
• **XU, Jing
Nantong, Jiangsu 226463 (CN)**
• **DING, Chunlai
Nantong, Jiangsu 226463 (CN)**
• **CAO, Shanshan
Nantong, Jiangsu 226463 (CN)**
• **XUE, Jiping
Nantong, Jiangsu 226463 (CN)**
• **XUE, Chi
Nantong, Jiangsu 226463 (CN)**

(74) Representative: **Fuchs Patentanwälte
Partnerschaft mbB
Tower 185
Friedrich-Ebert-Anlage 35-37
60327 Frankfurt am Main (DE)**

(54) **OPTICAL FIBER DRAWING FURNACE, OPTICAL FIBER PREPARATION APPARATUS, OPTICAL FIBER PREPARATION METHOD, AND SMALL-DIAMETER OPTICAL FIBER**

(57)    The disclosure provides an optical fiber wire-drawing furnace, an optical fiber preparation device, an optical fiber preparation method and a fine-diameter optical fiber. The optical fiber wiredrawing furnace comprises a heating graphite part and an air intake pipeline, the heating graphite part being connected with a first graphite segment, a second graphite segment and a third graphite segment sequentially; the air intake pipeline comprises a main pipeline, a first annular pipeline and a second annular pipeline; the first annular pipeline is provided with a first air intake port at an interval, the air intake direction being perpendicular to the axial direction of the first cylindrical cavity, and the included angle to the tangent direction being 30-60°; the second annular pipeline is provided with a second air intake port at an interval, the air intake direction being perpendicular to the axial direction of the second cylindrical cavity, and the included angle to the tangent direction being 30-60°; the intake direction of a plurality of first air intake ports and the intake direction of a plurality of second air intake ports vary in a clockwise direction as a whole or in a counterclockwise direction as a whole. The disclosure greatly improves the stability of the melt wiredrawing process.

Fig. 2

**Description**

**Technical Field**

The disclosure relates to the technical field of optical fiber production, in particular to an optical fiber wiredrawing furnace, an optical fiber preparation device, an optical fiber preparation method and a fine-diameter optical fiber.

**Background**

With China's large-scale promotion of triple play and "Broadband China" strategy, the construction of 5G network and data center has brought a new round of growth. With the expansion of broadband services, the construction of communication network has experienced the development from core network to access network and fiber to the home. The optical fiber constructed by FTTH is located in crowded and narrow passages, which puts forward higher requirements for the diameter of optical fiber.

In addition to conventional optical fiber having a coating thickness of 125 $\mu$M, the optical fiber having a coating thickness of 80 $\mu$M or even less has emerged, followed by the decreasing in the coating thickness of fine-diameter optical fiber. At present, the common optical fiber preparation processes are basically performed with the optical fibers having a coating thickness of 125 $\mu$M, but there is a lack of relevant processes for fine-diameter optical fiber with smaller size.

Generally, fine-diameter optical fiber needs to be drawn at a lower drawing speed to ensure that the diameter of bare fiber is smaller. However, when using the existing technology and equipment, problems such as instability in size and larger change in diameter will occur at a lower drawing speed, resulting in uneven size of fine-diameter optical fiber, and seriously affecting the properties of attenuation, and strength, etc., of optical fiber.

**Summary**

The main object of the disclosure aims to provide an optical fiber wiredrawing furnace, an optical fiber preparation device, an optical fiber preparation method and a fine-diameter optical fiber, so as to solve the problem that the size is unstable and uneven when the fine-diameter optical fiber is produced in the prior art, resulting in degradation in performances of the optical fiber such as attenuation, and strength, etc.

In order to achieve the above object, according to one aspect of the disclosure, an optical fiber wiredrawing furnace is provided, comprising a heating graphite part and an air intake pipeline, wherein the heating graphite part is connected with a first graphite segment, a second graphite segment and a third graphite segment sequentially, the first graphite segment has a first cylindrical cavity, the third graphite segment has a second cylindrical cavity, and the radial sectional area of the second cylindrical cavity is smaller than the radial sectional area of the first cylindrical cavity, and the second graphite segment has a truncated-cone cavity communicated with the first cylindrical cavity and the second cylindrical cavity, respectively; the first cylindrical cavity, the truncated-cone cavity and the second cylindrical cavity are arranged coaxially, wherein the end of the first graphite segment away from the second graphite segment is provided with a first annular air intake slit along its circumference, and the end of the third graphite segment away from the second graphite segment is provided with a second annular air intake slit along its circumference; the air intake pipeline comprises a main pipeline; a first annular pipeline, which is communicated with the main pipeline, the first annular pipeline is arranged at the periphery of the first annular air intake slit of the first graphite segment, the first annular pipeline is arranged coaxially with the first cylindrical cavity, and the first annular pipeline is provided with a plurality of first air intake ports at an interval for air intake to the first cylindrical cavity; the air intake direction of the first air intake port is perpendicular to the axial direction of the first cylindrical cavity, and the included angle to the tangent direction where it is located at the first annular pipeline is 30-60°; the second annular pipeline communicated with the main pipeline, the second annular pipeline is arranged at the periphery of the second annular air intake slit of the third graphite segment, the second annular pipeline is arranged coaxially with the second cylindrical cavity, and the second annular pipeline is provided with a plurality of second air intake ports at an interval for air intake to the second cylindrical cavity; and the air intake direction of the second air intake port is perpendicular to the axial direction of the second cylindrical cavity, and the included angle to the tangent direction where it is located at the second annular pipeline is 30-60°; wherein, the intake direction of the plurality of first air intake ports and the intake direction of the plurality of second air intake ports vary in a clockwise direction as a whole or in a counterclockwise direction as a whole.

Further, a plurality of the first air intake ports are arranged at the first annular pipeline at an equal interval, and a plurality of the second air intake ports are arranged at the second annular pipeline at an equal interval.

Further, the first air intake port is arranged at the side of the first annular pipeline near the outer wall of the first graphite segment, and corresponds to the first annular air intake slit; and the second air intake port is arranged at the side of the second annular pipeline near the outer wall of the third graphite segment, and corresponds to the second annular air intake slit.

Further, the optical fiber wiredrawing furnace also comprises an inert gas supply unit, which is connected with the main pipeline.

According to another aspect of the disclosure, an optical fiber preparation device is also provided, comprising: a rod feeding unit, which is used to feed the preform rod; a wiredrawing furnace, which is the optical fiber wiredrawing furnace as described above, and wherein the first graphite segment is arranged close to the rod feeding unit, and the third graphite segment is arranged away from the rod feeding unit, and the wiredrawing furnace is used for melt wiredrawing the preform rod under an inert atmosphere to obtain bare fiber; a heat preservation unit, which is connected with the wiredrawing furnace, and the heat preservation unit is used for heat preservation of the bare fiber; a coating unit, which is connected with the outlet of the heat preservation unit, and the coating unit is used for resin coating of the bare fiber; and a curing unit, which is connected with the outlet of the coating unit, the curing unit is used to cure the bare fiber after resin coating, so as to form a resin coating layer on the outside of the bare fiber to obtain the optical fiber.

Further, the heat preservation unit comprises a plurality of heat preservation furnaces connected in sequence and the outlet temperature of the plurality of heat preservation furnaces decreases in turn.

Further, a twisting unit, a traction unit and a take-up unit which are sequentially connected downstream of the curing unit are also included.

Further, an infrared thermal imaging unit arranged between the wiredrawing furnace and the heat preservation unit to monitor the temperature of the bare fiber coming out of the wiredrawing furnace; a bare fiber wire diameter meter arranged between the heat preservation unit and the coating unit to measure the wire diameter of the bare fiber; a non-contact tension meter arranged between the bare fiber wire diameter meter and the coating unit to monitor the online tension of the bare fiber; and an optical fiber dimensional measurement unit arranged between the curing unit and the twisting unit to measure the diameter of the optical fiber, are also included.

According to yet another aspect of the disclosure, an optical fiber preparation method is also provided, which uses the optical fiber preparation device as described above to prepare optical fiber, and the optical fiber preparation method comprises the following steps: step 1: feeding the preform rod to the wiredrawing furnace through the rod feeding unit for melt wiredrawing to obtain the bare fiber, during which at least part of the cone head of the preform rod being arranged in the truncated-cone cavity; and in the process of melt wiredrawing, supplying an inert gas to the air intake pipeline through the inert gas supply unit, and making the inert gas enter the heating graphite part through the first air intake port and the second air intake port; step 2, controlling the outlet temperature of the heat preservation unit to be lower than the processing temperature of the melt wiredrawing process, so that the bare fiber will gradually cool down in a heat preservation state of the heat preservation unit; and step 3: using the coating unit for resin coating on the surface of the cooled bare fiber, and then curing in the curing unit to form a resin coating layer on the outside of the bare fiber so as to obtain the optical fiber.

Further, the radial sectional area of an end of the truncated-cone cavity near the first graphite segment is recorded as S1, and the radial sectional area of an end of the truncated-cone cavity near the third graphite segment is recorded as S2; in the step of the inert gas entering the heating graphite part through the first air intake port and the second air intake port, the intake flow of the inert gas in the first annular pipeline is recorded as L1, and the intake flow of the inert gas in the second annular pipeline is recorded as L2, so that L1/S1 = L2/S2.

Further, L1+L2 = 10-50 L/min.

Further, the processing temperature of the melt wiredrawing process is 1800-2400°C, and the drawing speed of the bare fiber is 200-500 m/min; during the process of the cooled bare fiber entering the coating unit, the wire leading speed of the bare fiber is less than or equal to 25 m/min, and the wire leading time is less than or equal to 5 s.

Further, the heat preservation unit comprises a plurality of heat preservation furnaces connected in sequence, and the outlet temperature of the plurality of heat preservation furnaces decreases in turn; preferably, the inlet temperature of the heat preservation unit is 1300-1700°C, and the outlet temperature is 850-900°C; preferably, the residence time of the bare fiber in each of the heat preservation furnace is 0.0016-0.02 s.

Further, the step 3 comprises: using the first coating unit for the first layer of resin coating on the surface of the bare fiber, and then curing same in the first curing unit to form an inner resin coating layer on the outside of the bare fiber; and using the second coating unit for the second layer of resin coating on the surface of the inner resin coating layer, and then curing same in the second curing unit to form an outer resin coating layer on the outer surface of the inner resin coating layer, thus forming the optical fiber.

Further, the diameter of the bare fiber is 80 ± 1 μm, the diameter of the bare fiber of which the outside is provided with the inner resin coating layer is 120-135 μm, and the diameter of the optical fiber is 155-170 μm; preferably, the ratio of the thickness of inner resin coating layer to the thickness of outer resin coating layer is 1:(0.67-1.15).

Further, the raw material of the inner resin coating layer is the first acrylic resin coating, the elastic modulus of which after curing is less than or equal to 1 Mpa, the viscosity of the coating is 3500-7500 mPa•s at 25 °C, the density of the coating is 0.95-1.2 g/cm$^3$, and the elongation at break after curing is greater than or equal to 130%; and the raw material of the outer resin coating layer is the second acrylic resin coating, the elastic modulus of which after curing is greater than or equal to 550 Mpa, the viscosity of the coating is 3500-9500 mPa•s at 25°C, the density of the coating is 0.95-1.2 g/cm$^3$, and the elongation at break is greater than or equal to 10%; preferably, the temperature during the coating of the first resin layer is 32-55°C, and the coating viscosity at this temperature is 1500-3000 mPa•s; the temperature during the coating of the second resin layer is 32-55°C, and the coating viscosity at this temperature is 1500-3000 mPa•s.

Further, the curing form used by the curing unit is UV or LED curing, the curing power is greater than or equal to 300 W, the maximum power concentration area is less than or equal to 0.15 cm$^2$, and the curing time is 0.003-0.02 s.

According to yet another aspect of the disclosure, a fine-diameter optical fiber is also provided, which is prepared by the optical fiber preparation method as described above.

Further, the fine-diameter optical fiber comprises a bare fiber, an inner resin coating layer and an outer resin coating layer from the inside to the outside successively, the diameter of the bare fiber is $80 \pm 1$ μm, the diameter of the bare fiber of which the outside is provided with the inner resin coating layer is 120-135 μm, the diameter of the optical fiber is 155-170 μm, and the ratio of the thickness of inner resin coating layer to the thickness of outer resin coating layer is 1:(0.67-1.15).

The disclosure provides an optical fiber wiredrawing furnace. Through the design of the internal cavity of the graphite part in combination with the design of the air intake pipeline, it changes the air intake mode during the melt wiredrawing process of the preform rod, so that the inert gas can form a stable flow inside the graphite part, promoting the melt wiredrawing process to be in a stable airflow field, and greatly improving the stability of the melt wiredrawing process. With the optical fiber wiredrawing furnace provided by the disclosure, the wire diameter of the optical fiber can still keep a change in the wire diameter within a time period of 5 s to be less than 10μm when the wire leading speed of optical fiber is less than or equal to 25 m/min and the traction via external force is lost, which plays an excellent role in promoting the dimensional stability of the optical fiber, effectively improving the dimensional stability and uniformity of the optical fiber, especially the fine-diameter optical fiber, and correspondingly improving the performances of the optical fiber such as attenuation, and strength, etc., so that it can meet the use requirements in terms of these indicators.

## Brief Description of the Drawings

The accompanying drawings of the description, which form a part of the application, are used to provide a further understanding of the disclosure. The illustrative examples and their descriptions of the disclosure are used to explain the disclosure, and do not constitute an improper limitation thereto. In the accompanying drawings:

Figure 1 shows the structural representation of the optical fiber preparation device according to one embodiment of the disclosure;

Figure 2 shows the structural representation of the heating graphite part and the air intake pipeline in the optical fiber wiredrawing furnace according to one embodiment of the disclosure; and

Figure 3 shows the structural representation of the air intake pipeline in the optical fiber wiredrawing furnace according to one embodiment of the disclosure.

Wherein, the above drawings include the following reference symbols:

1. Rod feeding unit; 2. Wiredrawing furnace; 3. Heat preservation unit; 4. Coating unit; 5. Curing unit; 6. Twisting unit; 7. Traction unit; 8. Take-up unit; 9. Infrared thermal imaging unit; 10. Bare fiber wire diameter meter; 11. Non-contact tension meter; 12. Optical fiber dimensional measurement unit; 13. Central control unit;

100. Heating graphite part; 110. First graphite segment; 120. Second graphite segment; 130. Third graphite segment; 200. Air intake pipeline; 210. Main pipeline; 220. First annular pipeline; 230. Second annular pipeline; 201. First air intake port; 202. Second air intake port.

## Detailed Description of the Embodiments

It should be noted that the embodiments and features in the embodiments in the application can be combined with each other without conflict. The disclosure will be described in detail below with reference to the drawings and in combination with embodiments.

As described in the background technology, there are problems of unstable and uneven size when the fine-diameter optical fiber is produced in the prior art, resulting in degradation in performances of the optical fiber such as attenuation, and strength, etc.

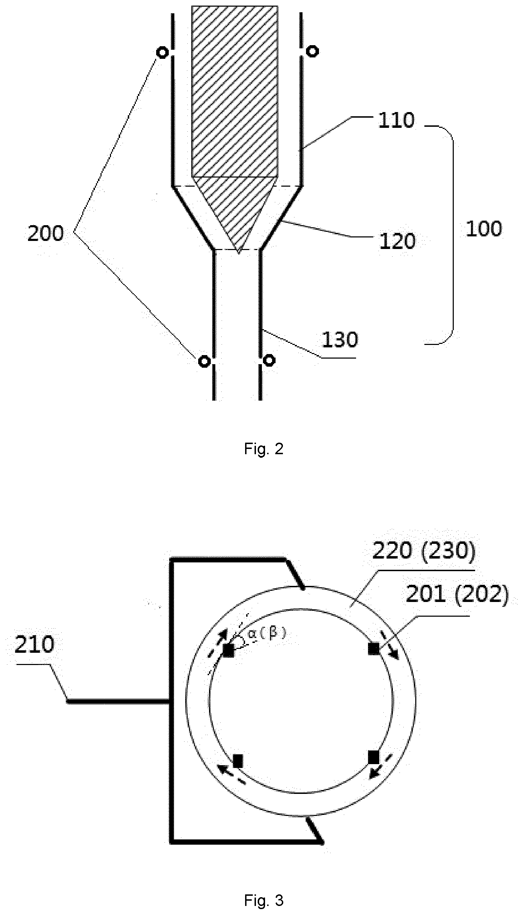

In order to solve the above problems, the disclosure provides an optical fiber wiredrawing furnace, as shown in figure 2, it comprises a heating graphite part 100 and an air intake pipeline 200, wherein the heating graphite part 100 is connected with a first graphite segment 110, a second graphite segment 120 and a third graphite segment 130 sequentially, the first graphite segment 110 has a first cylindrical cavity, the third graphite segment 130 has a second cylindrical cavity, and the radial sectional area of the second cylindrical cavity is smaller than the radial sectional area of the first cylindrical cavity, and the second graphite segment 120 has a truncated-cone cavity communicated with the first cylindrical cavity and the second cylindrical cavity, respectively; the first cylindrical cavity, the truncated-cone cavity and the second cylindrical cavity are arranged coaxially, wherein the end of the first graphite segment 110 away from the second graphite segment 120 is provided with a first annular air intake slit along its circumference, and the end of the third graphite segment 130 away from the second graphite segment 120 is provided with a second annular air intake slit along its circumference; as shown in figure 3, the air intake pipeline 200 comprises a main pipeline 210. a first annular pipeline 220 and a second annular pipeline 230, the first annular pipeline 220 is communicated with the main pipeline 210, the first annular pipeline 220 is arranged at the periphery of the first annular air intake slit of the first graphite segment 110, the first annular pipeline 220 is arranged coaxially with the first cylindrical cavity, and the first annular pipeline 220 is provided with a plurality of first air intake ports 201 at an interval for air intake to the first cylindrical cavity; the air intake direction of the first air intake port 201 is perpendicular to the axial direction of the first cylindrical cavity, and the included angle $\alpha$ to the tangent direction where it is located at the first annular pipeline 220 is 30-60°; the second annular pipeline 230 is communicated with the main pipeline 210, the second annular pipeline 230 is arranged at the periphery of the second annular air intake slit of the third graphite segment 130, the second annular pipeline 230 is arranged coaxially with the second cylindrical cavity, and the second annular pipeline 230 is provided with a plurality of second air intake ports 202 at an interval for air intake to the second cylindrical cavity; and the air intake direction of the second air intake port 202 is perpendicular to the axial direction of the second cylindrical cavity, and the included angle $\beta$ to the tangent direction where it is located at the second annular pipeline 230 is 30-60°; wherein, the intake direction of the plurality of first air intake ports and the intake direction of the plurality of second air intake ports vary in a clockwise direction as a whole or in a counterclockwise direction as a whole.

In this way, in the process of melt wiredrawing, the preform rod can be fed into the heating graphite part 100, and at least part of the cone head of the preform rod can be located in the truncated-cone cavity, and the melt wiredrawing can be carried out under the heating state of the heating graphite part 100. Since the air intake pipeline of the disclosure comprises a main pipeline 210 and a first annular pipeline 220 and a second annular pipeline 230 communicated therewith, and the first annular pipeline 220 is arranged at the periphery of the first annular air intake slit of the first graphite segment 110 and is arranged coaxially with the first cylindrical cavity, and the second annular pipeline 230 is arranged at the periphery of the second annular air intake slit of the third graphite segment 130 and is arranged coaxially with the second cylindrical cavity, in the actual production process, the inert gas can enter the first annular pipeline 220 and the second annular pipeline 230 through the main pipeline 210, respectively, and then pass through the first air intake ports and the second air intake ports to realize upper and lower air intake from the first annular air intake slit and the second annular air intake slit, respectively. More importantly, in the disclosure, the first annular pipeline 220 is provided with a plurality of first air intake ports at an interval, and the air intake direction of which is perpendicular to the axial direction of the first cylindrical cavity, and the included angle to the tangent direction where it is located at the first annular pipeline 220 is 30-60°, and the second annular pipeline 230 is provided with a plurality of second air intake ports at an interval, and the air intake direction of which is perpendicular to the axial direction of the second cylindrical cavity, and the included angle to the tangent direction where it is located at the second annular pipeline 230 is 30-60°, the intake direction of the plurality of first air intake ports and the intake direction of the plurality of second air intake ports vary in a clockwise direction as a whole or in a counterclockwise direction as a whole, which can realize that the inert gas in the two annular pipelines can enter the heating graphite part 100 in a direction of 30-60° deviating from the tangent to the position where it is located, and form an annular air intake in the same direction (clockwise or counterclockwise). Such air intake mode is more conducive to the formation of a stable annular air flow field during the melt wiredrawing process, which greatly improves the stability of the melt wiredrawing process.

On the basis of the above setup, with the optical fiber wiredrawing furnace provided by the disclosure, the wire diameter of the optical fiber can still keep a change in the wire diameter within a time period of 5 s to be less than 10μm when the wire leading speed of optical fiber is less than or equal to 25 m/min and the traction via external force is lost, which plays an excellent role in promoting the dimensional stability of the optical fiber, effectively improving the dimensional stability and uniformity of the optical fiber, especially the fine-diameter optical fiber, and correspondingly improving the performances of the optical fiber such as attenuation, and strength, etc., so that it can meet the use requirements in terms of these indicators.

Here it should be explained that, the above description "the intake direction of the plurality of first air intake ports and the intake direction of the plurality of second air intake ports vary in a clockwise direction as a whole or in a counterclockwise direction as a whole" means that the air intake direction of the plurality of the first air intake ports deviates to the same side along the tangent direction as a whole to form a clockwise or counterclockwise air intake collectively, and the clockwise and counterclockwise directions are relative to the surrounding direction of the first annular pipeline; and the air intake direction of the plurality of the second air intake ports deviates to the same side along the tangent direction as a whole to form a clockwise or counterclockwise air intake collectively, and the clockwise and counterclockwise directions are relative to the surrounding direction of the second annular pipeline; and the air intake of the first annular pipeline and the second annular pipeline are both clockwise or counterclockwise.

In addition, the first annular air intake slit and the second annular air intake slit can actually be formed at the assembly stage of the graphite part. As shown in figure 2, as for the first annular air intake slit, the first graphite segment 110 can be formed by stacking the upper and lower graphite sub-segments. When stacking, a slit with a certain width, such as 3.5-7.5mm, is set between the two graphite sub-segments, and in the actual operation, the first air intake ports arranged on the first annular pipeline 220 can purge the inert gas internally through the first annular air intake slit. The second annular air intake slit is of the same situation.

In a preferred embodiment, a plurality of the first air intake ports are arranged at the first annular pipeline 200 at an equal interval, and a plurality of the second air intake ports are arranged at the second annular pipeline 230 at an equal interval. Such arrangement can promote the inert gas to enter more evenly, which is conducive to further improving the stability of the gas environment during the melt wiredrawing process. More preferably, the first air intake port is arranged at the side of the first annular pipeline 220 near the outer wall of the first graphite segment 110, and corresponds to the first annular air intake slit; and the second air intake port is arranged at the side of the second annular pipeline 230 near the outer wall of the third graphite segment 130, and corresponds to the second annular air intake slit. As such, the gas from the first air intake port and the second air intake port can enter the interior of the graphite part more stably through the air intake slit in the original direction, which is conducive to further improving the stability of the internal gas field after the upper and lower air intake. More preferably, the first annular pipeline 220 is arranged in contact with the first graphite segment 110, and the second annular pipeline 230 is arranged in contact with the third graphite segment 130, so that the first air intake port and the first annular air intake slit are directly contacted and communicated, and the second air intake port and the second annular air intake slit are directly contacted and communicated, making the air intake more stable.

Preferably, the optical fiber wiredrawing furnace also comprises an inert gas supply unit, which is connected with the main pipeline 210.

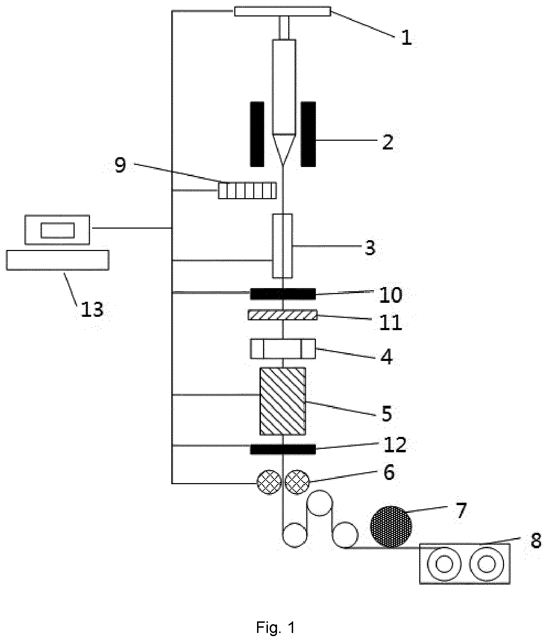

According to another aspect of the disclosure, an optical fiber preparation device is also provided, as shown in figure 1, it comprises: a rod feeding unit 1, a wiredrawing furnace 2, a heat preservation unit 3, a coating unit 4, and a curing unit 5, the rod feeding unit 1 is used to feed the preform rod; the wiredrawing furnace 2 is the optical fiber wiredrawing furnace as described above, and wherein the first graphite segment 110 is arranged close to the rod feeding unit 1, and the third graphite segment 130 is arranged away from the rod feeding unit 1, and the wiredrawing furnace 2 is used for melt wiredrawing the preform rod under an inert atmosphere to obtain bare fiber; the heat preservation unit 3 is connected with the wiredrawing furnace 2, and the heat preservation unit 3 is used for heat preservation of the bare fiber; the coating unit 4 is connected with the outlet of the heat preservation unit 3, and the coating unit 4 is used for resin coating of the bare fiber; the curing unit 5 is connected with the outlet of the coating unit 4, the curing unit 5 is used to cure the bare fiber after resin coating, so as to form a resin coating layer on the outside of the bare fiber to obtain the optical fiber.

As such, the preform rod can be subjected to rod feeding, melt wiredrawing, heat preservation, resin coating and curing successively in order to form a resin coating layer on the surface of the bare fiber, thus forming the optical fiber. As mentioned above, because the optical fiber wiredrawing furnace as described above is used as the above wiredrawing furnace 2, the melt wiredrawing process is in a very stable inert gas flow field, it has a great improvement effect on the stability of the melt wiredrawing process, effectively improving the dimensional stability and uniformity of the optical fiber, especially the fine-diameter optical fiber, and correspondingly improving the performances of the optical fiber such as attenuation, and strength, etc., so that it can meet the use requirements in terms of these indicators. In addition, for the setup of the heat preservation unit, the optical fiber is gradually cooled down from furnace temperature to room temperature after forming bare fiber in the wiredrawing furnace, and the glass viscosity varies from low to high. In this process, the impact of the hypothetical temperature of the optical fiber on the attenuation of the optical fiber is crucial. The hypothetical temperature is defined as the temperature ($T_f$) at which the glass changes from the softened state to the solidified state. The magnitude of the $T_f$ value represents the annealing degree of the optical fiber during the cooling process. The lower the $T_f$ value is, the more complete the annealing is, since the lower the Rayleigh scattering coefficient caused by the rearrangement of molecules and atoms, the closer the attenuation value is to the theoretical limit value.

In the process of optical fiber wiredrawing, it is assumed that the temperature is affected by the wiredrawing speed:

$$\frac{1}{T_f} = \frac{1}{T_g} + a_1 In\left(1 - \frac{In\frac{q}{q_0}}{a_2}\right)$$

(1)

Where, $a_1$ and $a_2$ are constants related to the material, q is the cooling speed (unit: K/s), $q_0$=1K/s. Therefore, reducing the cooling speed is an effective way to reduce the hypothetical temperature of the optical fiber. In the disclosure, in order to reduce the hypothetical temperature of the optical fiber, a heat preservation unit is provided behind the wiredrawing furnace to realize the heat preservation of the bare fiber formed after the wiredrawing so as to reduce the cooling speed of the optical fiber. On this basis, the attenuation performance of the optical fiber, especially fine-diameter optical fiber, can be further improved.

In order to control the cooling speed more effectively during the traveling process of bare fiber, and further improve the attenuation performance of the optical fiber, in a preferred embodiment, the heat preservation unit 3 comprises a plurality of heat preservation furnaces connected in sequence, and the outlet temperature of the plurality of heat preservation furnaces decreases in turn.

In a preferred embodiment, the above device also comprises a twisting unit 6, a traction unit 7 and a take-up unit 8 which are sequentially connected downstream of the curing unit 5. These devices can further improve the production continuity and stability of the optical fiber. Preferably, traction wheels are also arranged between the traction unit 7 and the twisting unit 6 for pulling the optical fiber. More preferably, the above device also comprises: an infrared thermal imaging unit 9 arranged between the wiredrawing furnace 2 and the heat preservation unit 3 to monitor the temperature of the bare fiber coming out of the wiredrawing furnace 2; a bare fiber wire diameter meter 10 arranged between the heat preservation unit 3 and the coating unit 4 to measure the wire diameter of the bare fiber; a non-contact tension meter 11 arranged between the bare fiber wire diameter meter 10 and the coating unit 4 to monitor the online tension of the bare fiber; and an optical fiber dimensional measurement unit 12 arranged between the curing unit 5 and the twisting unit 6 to measure the diameter of the optical fiber. The temperature of the bare fiber coming out of the wiredrawing furnace 2 is monitored to facilitate the monitoring of its temperature when entering the heat preservation unit, so as to facilitate the temperature adjustment of the heat preservation unit according to the actual temperature and ensure that the annealing of the bare fiber reaches a better level. Because many data such as fiber cut-off wavelength and mode field diameter are related to tension, tension can be used as a reference value to adjust parameters in time.

In addition, preferably, the above device also comprises a central control unit 13, which is electrically connected with the rod feeding unit 1, wiredrawing furnace 2, heat preservation unit 3, coating unit 4, curing unit 5, twisting unit 6, traction unit 7, take-up unit 8, infrared thermal imaging unit 9, bare fiber wire diameter meter 10, non-contact tension meter 11, and optical fiber dimensional measurement unit 12 to control the operation of these parts and improve production efficiency, continuity and stability.

According to yet another aspect of the disclosure, an optical fiber preparation method is also provided, which uses the optical fiber preparation device as described above to prepare optical fiber, and the optical fiber preparation method comprises the following steps: step 1: feeding the preform rod to the wiredrawing furnace 2 through the rod feeding unit 1 for melt wiredrawing to obtain the bare fiber, during which at least part of the cone head of the preform rod being arranged in the truncated-cone cavity; and in the process of melt wiredrawing, supplying an inert gas to the air intake pipeline 200 through the inert gas supply unit, and making the inert gas enter the heating graphite part 100 through the first air intake port and the second air intake port; step 2, controlling the outlet temperature of the heat preservation unit 3 to be lower than the processing temperature of the melt wiredrawing process, so that the bare fiber will gradually cool down in a heat preservation state of the heat preservation unit 3; and step 3: using the coating unit 4 for resin coating on the surface of the cooled bare fiber, and then curing in the curing unit 5 to form a resin coating layer on the outside of the bare fiber so as to obtain the optical fiber.

Using the above preparation method, the rod feeding, melt wiredrawing, heat preservation and cooling, resin coating and curing of the optical fiber are completed successively and the optical fiber is obtained. As mentioned above, because the melt wiredrawing process is carried out in a stable inert gas flow field, it effectively improves the dimensional stability and uniformity of the optical fiber, especially the fine-diameter optical fiber, and correspondingly improves the performances of the optical fiber such as attenuation, and strength, etc., so that it can meet the use requirements in terms of these indicators. At the same time, after melt wiredrawing, the bare fiber is cooled down by the heat preservation unit 3 under the heat preservation state, which effectively reduces its cooling speed and also has a better facilitation effect on the attenuation performance of the optical fiber.

In a preferred embodiment, the radial sectional area of an end of the truncated-cone cavity near the first graphite segment 110 is recorded as S1, and the radial sectional area of an end of the truncated-cone cavity near the third graphite segment 130 is recorded as S2; in the step of the inert gas entering the heating graphite part 100 through the first air intake port and the second air intake port, the intake flow of the inert gas in the first annular pipeline 220 is recorded as L1, and the intake flow of the inert gas in the second annular pipeline 230 is recorded as L2, so that L1/S1 = L2/S2. According to the different radial sectional areas at the two ends of the third graphite segment 130 during the upper and lower air intake process, controlling the upper and lower air intake flow within the above range is conducive to further improving the stability of the inert gas flow field, and has a better role in promoting the dimensional homogeneity of the optical fiber. More preferably, L1+L2 = 10-50 L/min. Specifically, the inert gas can be helium or argon.

In order to further improve the stability of the melt wire drawing process and prepare fine-diameter optical fibers with finer wire diameter at the same time, in a preferred embodiment, the processing temperature of the melt wiredrawing process is 1800-2400°C, and the drawing speed of the bare fiber is 200-500 m/min; during the process of the cooled bare fiber entering the coating unit 4, the wire leading speed of the bare fiber is less than or equal to 25 m/min, and the wire leading time is less than or equal to 5 s. In the actual drawing process, the bare fiber is in the high-speed drawing state. After the formation of bare fiber, it is necessary to enter the mold of the coating unit to coat the resin coating layer. In this process, a low wire leading speed is usually required, however, when the bare fiber is at a slow speed or even stopped, the wire diameter tends to grow quickly and exceed the mold size. Due to the particularity of the fine-diameter optical fiber wiredrawing process, it is desired that the wire diameter of the optical fiber can remain relatively stable for a period of time when the optical fiber is at a low speed or even stopped. As mentioned above, since the annular air intake mode greatly improves the stability in the drawing process, the cooled bare fiber of the disclosure can maintain a small dimensional change in a short time within 5 s when the wire leading speed of the bare fiber is less than or equal to 25 m/min in the process of entering the coating unit.

In a preferred embodiment, the heat preservation unit 3 comprises a plurality of heat preservation furnaces connected in sequence, and the outlet temperature of the plurality of heat preservation furnaces decreases in turn. This can further reduce the cooling speed of bare fiber through multi-stage heat preservation while improving the production continuity and stability. For example, n (n ≥ 2) sections of heat preservation furnaces with a length of 1 m can be arranged behind the wiredrawing furnace. The temperature control of the n sections of heat preservation furnaces is independent of each other, but the n sections of heat preservation furnaces are interconnected and not exposed to the air. The temperature of the optical fiber entering the heat preservation unit 3 is set to be T1, and the temperature of the optical fiber leaving the heat preservation unit 3 is set to be T2, wherein the temperature range of T1 is 1300-1700 °C, and the temperature range of T2 is 850-900 °C.

Preferably, the residence time of the bare fiber in each of the heat preservation furnaces is 0.0016-0.02 s.

In a preferred embodiment, the above step 3 comprises: using the first coating unit 4 for the first layer of resin coating on the surface of the bare fiber, and then curing same in the first curing unit 5 to form an inner resin coating layer on the outside of the bare fiber; and using the second coating unit 4 for the second layer of resin coating on the surface of the inner resin coating layer, and then curing same in the second curing unit 5 to form an outer resin coating layer on the outer surface of the inner resin coating layer, thus forming the optical fiber. As such, the inner resin coating layer and the outer resin coating layer can be successively coated on the surface of the bare fiber, which is conducive to improving the comprehensive properties such as flexibility, bendability, and tensile property, etc. of the optical fiber. In a preferred embodiment, the diameter of the bare fiber is 80 ± 1 μm, the diameter of the bare fiber of which the outside is provided with the inner resin coating layer is 120-135 μm, and the diameter of the optical fiber is 155-170 μm.

In a preferred embodiment, the raw material of the inner resin coating layer is the first acrylic resin coating, the elastic modulus of which after curing is less than or equal to 1 Mpa, the viscosity of the coating is 3500-7500 mPa•s at 25 °C, the density of the coating is 0.95-1.2 g/cm$^3$, and the elongation at break after curing is greater than or equal to 130%; and the material of the outer resin coating layer is the second acrylic resin coating, the elastic modulus of which after curing is greater than or equal to 550 Mpa, the viscosity of the coating is 3500-9500 mPa•s at 25°C, the density of the coating is 0.95-1.2 g/cm$^3$, and the elongation at break is greater than or equal to 10%; preferably, the temperature during the coating of the first resin layer is 32-55°C, and the coating viscosity at this temperature is 1500-3000 mPa•s; the temperature during the coating of the second resin layer is 32-55°C, and the coating viscosity at this temperature is 1500-3000 mPa•s. The above mentioned first acrylic resin coating and the second acrylic resin coating can be commercially available, as long as the above parameters and properties are met, that is, it is more suitable to use the preparation method as described above according to the disclosure to prepare the fine-diameter optical fiber. The specific manufacturers include but are not limited to: Momentive, DSM, Victor, PhiChem, etc.

In a preferred embodiment, the curing form used by the curing unit 5 is UV or LED curing, the curing power is greater than or equal to 300 W, the maximum power concentration area is less than or equal to 0.15 cm$^2$, and the curing time is 0.003-0.02 s. As such, the resin coating layer can be fully cured. Theoretically, the light source will converge into a point after passing through the reflector, but in the actual implementation process, due to the processing progress and technology of the reflector, the reflector is not in an ideal shape after processing, and the light will converge into an area rather than a point. The smaller the area, the higher the concentration of light, and the better the curing efficiency. Here, the maximum power concentration area refers to the area after the light of the curing light source converges.

In the actual curing process, it is preferable to control the curing degree of the first layer of resin coating to be 86-95%, and the curing degree of the second layer of resin coating to be 90-100%, which is conducive to better balance of the anti-attenuation performance and bending loss performance of the optical fiber, andat the same time better protection of the inner layer of bare fiber.

According to yet another aspect of the disclosure, a fine-diameter optical fiber is also provided, which is prepared by the optical fiber preparation method as described above. Preferably, the fine-diameter optical fiber comprises a bare fiber, an inner resin coating layer and an outer resin coating layer from the inside to the outside successively, the diameter of the bare fiber is $80 \pm 1$ $\mu$m, the diameter of the bare fiber of which the outside is provided with the inner resin coating layer is 120-135 $\mu$m, the diameter of the optical fiber is 155-170 $\mu$m, and the ratio of the thickness of inner resin coating layer to the thickness of outer resin coating layer is 1:0.67-1.15. The fine-diameter optical fiber has small size and meets the various indicators such as attenuation, and strength, etc.

The present application will be further described in detail below in combination with specific examples, which cannot be understood as limiting the scope of protection claimed in the present application.

Example 1

In this example, the optical fiber preparation device as shown in figure 1 was used to prepare the fine-diameter optical fiber, and the specific process is as follows:

the preform rod was fed to the wiredrawing furnace through the rod feeding unit for melt wiredrawing to obtain the bare fiber, during which at least part of the cone head of the preform rod was arranged in the truncated-cone cavity; and in the process of melt wiredrawing, an inert gas was supplied to the air intake pipeline through the inert gas (helium) supply unit, so that the inert gas entered the heating graphite part through the first air intake port and the second air intake port. In this process, the melting temperature of the preform rod was 2000°C, and the intake flow of the inert gas in the first annular pipeline was recorded as L1, and the intake flow of the inert gas in the second annular pipeline was recorded as L2, so that L1/S1 = L2/S2, L1+L2 = 25 L/min, and the wiredrawing speed was 200 m/min. The air intake pipeline comprised a main pipeline, a first annular pipeline and a second annular pipeline, the first annular pipeline was communicated with the main pipeline, the first annular pipeline was arranged at the periphery of the first annular air intake slit of the first graphite segment and arranged in contact therewith, and the first annular pipeline was arranged coaxially with the first cylindrical cavity. The first annular pipeline was provided with four first air intake ports at an interval, which were arranged on the side corresponding to the first air intake slit, the air intake direction of which was perpendicular to the axial direction of the first cylindrical cavity, and the included angle to the tangent direction where it was located at the first annular pipeline was 30°; the second annular pipeline was communicated with the main pipeline, the second annular pipeline was arranged at the periphery of the second annular air intake slit of the third graphite segment, and the second annular pipeline was arranged coaxially with the second cylindrical cavity. The second annular pipeline was provided with four second air intake ports at an interval, which were arranged on the side corresponding to the second air intake slit, the air intake direction of which was perpendicular to the axial direction of the second cylindrical cavity, and the included angle to the tangent direction where it was located at the second annular pipeline was 30°; among them, the air intake directions of the four first air intake ports and the four second air intake ports vary in a clockwise direction as a whole (observed from the entering direction of the preform rod).

The bare fiber obtained at the wiredrawing speed of 200 m/min continuously entered three sections of heat preservation furnace for gradual cooling, respectively: the temperature of the first section was 1200°C, and the residence time was 0.005 s; the second section was 1100°C, and the residence time was 0.005 s; the third section was 1050°C, the residence time was 0.005 s, the inlet temperature of the first section of heat preservation furnace was 1650°C, and the outlet temperature of the third section of heat preservation furnace was 900°C.

The cooled bare fiber passed through the mold and entered the coating stage at a wire leading speed of less than or equal to 25 m/min, for a time of 5 s. After entering the mold, the first coating unit was used for the first layer of resin coating on the surface of the bare fiber, and then cured in the first curing unit to form an inner resin coating layer on the outside of the bare fiber; and the second coating unit was used for the second layer of resin coating on the surface of the inner resin coating layer, and then cured in the second curing unit to form an outer resin coating layer on the outer surface of the inner resin coating layer, thus forming the optical fiber. Wherein, the raw material of the inner resin coating layer was the first acrylic resin coating, the elastic modulus of which after curing was 0.88 Mpa, the viscosity of the coating was 6500 mPa•s at 25 °C, the density of the coating was 0.96 g/cm$^3$, and the elongation at break after curing was 140%; and the material of the outer resin coating layer was the second acrylic resin coating, the elastic modulus of which after curing was 1220 Mpa, the viscosity of the coating was 6000 mPa•s at 25°C, the density of the coating was 1.1128 g/cm$^3$, and the elongation at break was 14.74%; the temperature during the coating of the first resin layer was 45°C, and the coating viscosity at this temperature was 2500 mPa•s; the temperature during the coating of the second resin layer was 40°C, and the coating viscosity at this temperature was 2200 mPa•s. In the two curing processes, the first curing was UV curing, the power was 400W, the maximum power concentration area was less than or equal to 0.15

cm$^2$, the curing time was 0.0025 s, and the curing degree was 92%; the second curing was UV curing, the power was 400W, the maximum power concentration area was less than or equal to 0.15 cm$^2$, the curing time was 0.0025 s, and the curing degree was 94%. The above 1 # optical fiber was finally formed, and the diameter deviation of the cladding was less than 0.15 μm and diameter deviation of coating layer was less than 1.5 μm, according to the online monitoring via the wire diameter meter.

Example 2

The difference between this example and example 1 lied in that: the first annular pipeline was provided with four first air intake ports at an interval, and the included angle to the tangent direction where it was located at the first annular pipeline was 60°; and the second annular pipeline was provided with four second air intake ports at an interval, and the included angle to the tangent direction where it was located at the second annular pipeline was 60°. The difference between this example and example 1 lied in that: the melting temperature of the preform rod was 1980°C, the air flow L1+L2=22L/min, and the wiredrawing speed was 250 m/min. Four sections of heat preservation furnaces, respectively: the temperature of the first section was 1200°C, and the residence time was 0.004 s; the second section was 1100°C, and the residence time was 0.004 s; the third section was 1000°C, the residence time was 0.004 s; and the fourth section was 950°C, the residence time was 0.004 s; the inlet temperature of the first section of heat preservation furnace was 1700°C, and the outlet temperature of the fourth section of heat preservation furnace was 925°C.

The raw material of the inner resin coating layer was the first acrylic resin coating, the elastic modulus of which after curing was 0.88 Mpa, the viscosity of the coating was 6500 mPa•s at 25°C, the density of the coating was 0.96 g/cm$^3$, and the elongation at break after curing was 140%; and the material of the outer resin coating layer was the second acrylic resin coating, the elastic modulus of which after curing was 1220 Mpa, the viscosity of the coating was 6000 mPa•s at 25°C, the density of the coating was 1.1128 g/cm$^3$, and the elongation at break was 14.74%; the temperature during the coating of the first resin layer was 47°C, and the coating viscosity at this temperature was 2400 mPa•s; the temperature during the coating of the second resin layer was 42°C, and the coating viscosity at this temperature was 2000 mPa•s.

In the two curing processes, the first curing was UV curing, the power was 450W, the maximum power concentration area was less than or equal to 0.15 cm$^2$, the curing time was 0.002 s, and the curing degree was 90%; the second curing was UV curing, the power was 450W, the maximum power concentration area was less than or equal to 0.15 cm$^2$, the curing time was 0.002 s, and the curing degree was 96%. The above 2# optical fiber was finally formed, and the diameter deviation of the cladding was less than 0.15 μm and diameter deviation of coating layer was less than 1.5 μm, according to the online monitoring via the wire diameter meter.

Example 3

The difference between this example and example 1 lied in that: the first annular pipeline was provided with six first air intake ports at an interval, and the included angle to the tangent direction where it was located at the first annular pipeline was 40°; and the second annular pipeline was provided with six second air intake ports at an interval, and the included angle to the tangent direction where it was located at the second annular pipeline was 40°. The difference between this example and example 1 lied in that: the melting temperature of the preform rod was 2100°C, the air flow L1+L2=35L/min, and the wiredrawing speed was 350m/min. Four sections of heat preservation furnaces, respectively: the temperature of the first section was 1200°C, and the residence time was 0.003 s; the second section was 1150°C, and the residence time was 0.003 s; the third section was 1000°C, the residence time was 0.003 s; and the fourth section was 950°C, the residence time was 0.003 s; the inlet temperature of the first section of heat preservation furnace was 1600°C, and the outlet temperature of the fourth section of heat preservation furnace was 900°C.

The raw material of the inner resin coating layer was the first acrylic resin coating, the elastic modulus of which after curing was 0.77 Mpa, the viscosity of the coating was 6200 mPa•s at 25 °C, the density of the coating was 1.03g/cm$^3$, and the elongation at break after curing was 135%; and the material of the outer resin coating layer was the second acrylic resin coating, the elastic modulus of which after curing was 810 Mpa, the viscosity of the coating was 5600 mPa•s at 25°C, the density of the coating was 1.09g/cm$^3$, and the elongation at break was 13.27%; the temperature during the coating of the first resin layer was 49°C, and the coating viscosity at this temperature was 2250 mPa•s; the temperature during the coating of the second resin layer was 42°C, and the coating viscosity at this temperature was 2000 mPa•s. In the two curing processes, the first curing was UV curing, the power was 500W, the maximum power concentration area was less than or equal to 0.15 cm$^2$, the curing time was 0.0015 s, and the curing degree was 92%; the second curing was UV curing, the power was 500W, the maximum power concentration area was less than or equal to 0.15 cm$^2$, the curing time was 0.0015 s, and the curing degree was 98%. The above 3# optical fiber was finally formed, and the diameter deviation of the cladding was less than 0.15 μm and diameter deviation of coating layer was less than 1.5 μm, according to the online monitoring via the wire diameter meter.

Example 4

The difference between this example and example 1 lied in that: the melting temperature of the preform rod was 2050°C, the air flow L1+L2=30L/min, and the wiredrawing speed was 300 m/min. Three sections of heat preservation furnaces, respectively: the temperature of the first section was 1250°C, and the residence time was 0.003 s; the second section was 1100°C, and the residence time was 0.003 s; and the third section was 950°C, the residence time was 0.003 s; the inlet temperature of the first section of heat preservation furnace was 1500°C, and the outlet temperature of the fourth section of heat preservation furnace was 875°C.

The raw material of the inner resin coating layer was the first acrylic resin coating, the elastic modulus of which after curing was 0.32 Mpa, the viscosity of the coating was 6600 mPa•s at 25 °C, the density of the coating was 1.02g/cm$^3$, and the elongation at break after curing was 162%; and the material of the outer resin coating layer was the second acrylic resin coating, the elastic modulus of which after curing was 567 Mpa, the viscosity of the coating was 4700 mPa•s at 25°C, the density of the coating was 1.08g/cm$^3$, and the elongation at break was 17.21%; the temperature during the coating of the first resin layer was 47°C, and the coating viscosity at this temperature was 2400 mPa•s; the temperature during the coating of the second resin layer was 40°C, and the coating viscosity at this temperature was 2200 mPa•s. In the two curing processes, the first curing was UV curing, the power was 500W, the maximum power concentration area was less than or equal to 0.15 cm$^2$, the curing time was 0.0016 s, and the curing degree was 91%; the second curing was UV curing, the power was 500W, the maximum power concentration area was less than or equal to 0.15 cm$^2$, the curing time was 0.0016 s, and the curing degree was 96%. The above 4# optical fiber was finally formed, and the diameter deviation of the cladding was less than 0.15 $\mu$m and diameter deviation of coating layer was less than 1.5 $\mu$m, according to the online monitoring via the wire diameter meter.

Example 5

The difference between this example and example 1 lied in that: the melting temperature of the preform rod was 2150°C, the air flow L1+L2=40L/min, and the wiredrawing speed was 400m/min. Five sections of heat preservation furnaces, respectively: the temperature of the first section was 1350°C, and the residence time was 0.0025 s; the second section was 1250°C, and the residence time was 0.0025 s; the third section was 1100°C, the residence time was 0.0025 s; the fourth section was 1000°C, the residence time was 0.0025s; and the fifth section was 950°C, the residence time was 0.0025s; the inlet temperature of the first section of heat preservation furnace was 1600°C, and the outlet temperature of the fourth section of heat preservation furnace was 900°C.

The raw material of the inner resin coating layer was the first acrylic resin coating, the elastic modulus of which after curing was 0.32 Mpa, the viscosity of the coating was 6600 mPa•s at 25 °C, the density of the coating was 1.02g/cm$^3$, and the elongation at break after curing was 162%; and the material of the outer resin coating layer was the second acrylic resin coating, the elastic modulus of which after curing was 567 Mpa, the viscosity of the coating was 4700 mPa•s at 25°C, the density of the coating was 1.08g/cm$^3$, and the elongation at break was 17.21%. The temperature during the coating of the first resin layer was 45°C, and the coating viscosity at this temperature was 2100 mPa•s; the temperature during the coating of the second resin layer was 38°C, and the coating viscosity at this temperature was 2000 mPa•s. In the two curing processes, the first curing was UV curing, the power was 600W, the maximum power concentration area was less than or equal to 0.15 cm$^2$, the curing time was 0.00125 s, and the curing degree was 90%; the second curing was UV curing, the power was 600W, the maximum power concentration area was less than or equal to 0.15 cm$^2$, the curing time was 0.00125 s, and the curing degree was 95%. The above 5# optical fiber was finally formed, and the diameter deviation of the cladding was less than0.15 $\mu$m and diameter deviation of coating layer was less than 1.5 $\mu$m, according to the online monitoring via the wire diameter meter.

Table 1

| Optical fiber preform rod | 1# | 2# | 3# | 4# | 5# |
|---|---|---|---|---|---|
| Median diameter value of cladding ($\mu$m) | 80.01 | 79.98 | 80.12 | 80.03 | 79.91 |
| Optical fiber size after primary coating ($\mu$m) | 130.18 | 129.21 | 128.63 | 129.59 | 130.22 |
| Optical fiber size after secondary coating ($\mu$m) | 163.1 | 164.2 | 161.1 | 162.3 | 163.4 |

The above contents only describe the preferred examples of the disclosure, and are not intended to limit the disclosure. For those skilled in the art, various modifications and changes can be made to the disclosure. Any modifications, equivalent substitutions, improvements, and the like made within the spirit and principle of the disclosure shall be included within the scope of protection of the disclosure.

**Claims**

1. An optical fiber wiredrawing furnace, comprising a heating graphite part (100) and an air intake pipeline (200), wherein,

the heating graphite part (100) is connected with a first graphite segment (110), a second graphite segment (120) and a third graphite segment (130) sequentially, the first graphite segment (110) has a first cylindrical cavity, the third graphite segment (130) has a second cylindrical cavity, and the radial sectional area of the second cylindrical cavity is smaller than the radial sectional area of the first cylindrical cavity, and the second graphite segment (120) has a truncated-cone cavity communicated with the first cylindrical cavity and the second cylindrical cavity, respectively; the first cylindrical cavity, the truncated-cone cavity and the second cylindrical cavity are arranged coaxially, wherein the end of the first graphite segment (110) away from the second graphite segment (120) is provided with a first annular air intake slit along its circumference, and the end of the third graphite segment (130) away from the second graphite segment (120) is provided with a second annular air intake slit along its circumference;

the air intake pipeline (200) comprises:

a main pipeline (210);
a first annular pipeline (220) communicated with the main pipeline (210), the first annular pipeline (220) is arranged at the periphery of the first annular air intake slit of the first graphite segment (110), the first annular pipeline (220) is arranged coaxially with the first cylindrical cavity, and the first annular pipeline (220) is provided with a plurality of first air intake ports at an interval for air intake to the first cylindrical cavity; and the air intake direction of the first air intake port is perpendicular to the axial direction of the first cylindrical cavity, and the included angle to the tangent direction where it is located at the first annular pipeline (220) is 30-60°;
a second annular pipeline (230) communicated with the main pipeline (210), the second annular pipeline (230) is arranged at the periphery of the second annular air intake slit of the third graphite segment (130), the second annular pipeline (230) is arranged coaxially with the second cylindrical cavity, and the second annular pipeline (230) is provided with a plurality of second air intake ports at an interval for air intake to the second cylindrical cavity; and the air intake direction of the second air intake port is perpendicular to the axial direction of the second cylindrical cavity, and the included angle to the tangent direction where it is located at the second annular pipeline (230) is 30-60°;
wherein, the intake direction of the plurality of first air intake ports and the intake direction of the plurality of second air intake ports vary in a clockwise direction as a whole or in a counterclockwise direction as a whole.

2. The optical fiber wiredrawing furnace according to claim 1, wherein a plurality of the first air intake ports are arranged at the first annular pipeline (220) at an equal interval, and a plurality of the second air intake ports are arranged at the second annular pipeline (230) at an equal interval.

3. The optical fiber wiredrawing furnace according to claim 1 or 2, wherein the first air intake port is arranged at the side of the first annular pipeline (220) near the outer wall of the first graphite segment (110), and corresponds to the first annular air intake slit; and the second air intake port is arranged at the side of the second annular pipeline (230) near the outer wall of the third graphite segment (130), and corresponds to the second annular air intake slit.

4. The optical fiber wiredrawing furnace according to claim 1 or 2, wherein the optical fiber wiredrawing furnace also comprises an inert gas supply unit, which is connected with the main pipeline (210).

5. An optical fiber preparation device, comprising:

a rod feeding unit (1), which is used to feed the preform rod;
the wiredrawing furnace (2), which is the optical fiber wiredrawing furnace of any one of claims 1 to 4, wherein the first graphite segment (110) is arranged close to the rod feeding unit (1), and the third graphite segment (130) is arranged away from the rod feeding unit (1), and the wiredrawing furnace (2) is used for melt wiredrawing the preform rod under an inert atmosphere to obtain bare fiber;
a heat preservation unit (3), which is connected with the wiredrawing furnace (2), and the heat preservation unit (3) is used for heat preservation of the bare fiber;
a coating unit (4), which is connected with the outlet of the heat preservation unit (3), and the coating unit (4) is used for resin coating of the bare fiber; and

a curing unit (5), which is connected with the outlet of the coating unit (4), the curing unit (5) is used to cure the bare fiber after resin coating, so as to form a resin coating layer on the outside of the bare fiber to obtain the optical fiber.

6. The optical fiber preparation device according to claim 5, wherein the heat preservation unit (3) comprises a plurality of heat preservation furnaces connected in sequence, and the outlet temperature of the plurality of heat preservation furnaces decreases in turn.

7. The optical fiber preparation device according to claim 5, wherein it also comprises a twisting unit (6), a traction unit (7) and a take-up unit (8) which are sequentially connected downstream of the curing unit (5).

8. The optical fiber preparation device according to claim 5, wherein it also comprises:

an infrared thermal imaging unit (9) arranged between the wiredrawing furnace (2) and the heat preservation unit (3) to monitor the temperature of the bare fiber coming out of the wiredrawing furnace (2);
a bare fiber wire diameter meter (10) arranged between the heat preservation unit (3) and the coating unit (4) to measure the wire diameter of the bare fiber;
a non-contact tension meter (11) arranged between the bare fiber wire diameter meter (10) and the coating unit (4) to monitor the online tension of the bare fiber; and
an optical fiber dimensional measurement unit (12) arranged between the curing unit (5) and the twisting unit (6) to measure the diameter of the optical fiber.

9. An optical fiber preparation method, wherein the optical fiber is prepared by the optical fiber preparation device of any one of claims 5 to 8, and the optical fiber preparation method comprise the following steps:

step 1: feeding the preform rod to the wiredrawing furnace (2) through the rod feeding unit (1) for melt wiredrawing to obtain the bare fiber, during which at least part of the cone head of the preform rod being arranged in the truncated-cone cavity; and in the process of melt wiredrawing, supplying an inert gas to the air intake pipeline (200) through the inert gas supply unit, and making the inert gas enter the heating graphite part (100) through the first air intake port and the second air intake port;
step 2, controlling the outlet temperature of the heat preservation unit (3) to be lower than the processing temperature of the melt wiredrawing process, so that the bare fiber will gradually cool down in a heat preservation state of the heat preservation unit (3); and
step 3: using the coating unit (4) for resin coating on the surface of the cooled bare fiber, and then curing in the curing unit (5) to form a resin coating layer on the outside of the bare fiber so as to obtain the optical fiber.

10. The optical fiber preparation method according to claim 9, wherein the radial sectional area of an end of the truncated-cone cavity near the first graphite segment (110) is recorded as S1, and the radial sectional area of an end of the truncated-cone cavity near the third graphite segment (130) is recorded as S2; in the step of the inert gas entering the heating graphite part (100) through the first air intake port and the second air intake port, the intake flow of the inert gas in the first annular pipeline (220) is recorded as L1, and the intake flow of the inert gas in the second annular pipeline (230) is recorded as L2, so that L1/S1 = L2/S2.

11. The optical fiber preparation method according to claim 10, wherein L1+L2 = 10-50L/min.

12. The optical fiber preparation method according to any one of claims 9 to 11, wherein the processing temperature of the melt wiredrawing process is 1800-2400°C, and the drawing speed of the bare fiber is 200-500 m/min; during the process of the cooled bare fiber entering the coating unit (4), the wire leading speed of the bare fiber is less than or equal to 25 m/min, and the wire leading time is less than or equal to 5 s.

13. The optical fiber preparation method according to any one of claims 9 to 12, wherein the heat preservation unit (3) comprises a plurality of heat preservation furnaces connected in sequence, and the outlet temperature of the plurality of heat preservation furnaces decreases in turn;

preferably, the inlet temperature of the heat preservation unit (3) is 1300-1700°C, and the outlet temperature is 850-900°C;
preferably, the residence time of the bare fiber in each of the heat preservation furnace is 0.0016-0.02 s.

**14.** The optical fiber preparation method according to any one of claims 9 to 13, wherein the step 3 comprises: using the first coating unit (4) for the first layer of resin coating on the surface of the bare fiber, and then curing same in the first curing unit (5) to form an inner resin coating layer on the outside of the bare fiber; and using the second coating unit (4) for the second layer of resin coating on the surface of the inner resin coating layer, and then curing same in the second curing unit (5) to form an outer resin coating layer on the outer surface of the inner resin coating layer, thus forming the optical fiber.

**15.** The optical fiber preparation method according to claim 14, wherein the diameter of the bare fiber is 80 $\pm$ 1 $\mu$m, the diameter of the bare fiber of which the outside is provided with the inner resin coating layer is 120-135 $\mu$m, and the diameter of the optical fiber is 155-170 $\mu$m; preferably, the ratio of the thickness of inner resin coating layer to the thickness of outer resin coating layer is 1:(0.67-1.15).

**16.** The optical fiber preparation method according to claim 14, wherein the raw material of the inner resin coating layer is the first acrylic resin coating, the elastic modulus of which after curing is less than or equal to 1 Mpa, the viscosity of the coating is 3500-7500 mPa•s at 25 °C, the density of the coating is 0.95-1.2 g/cm$^3$, and the elongation at break after curing is greater than or equal to 130%; and the raw material of the outer resin coating layer is the second acrylic resin coating, the elastic modulus of which after curing is greater than or equal to 550 Mpa, the viscosity of the coating is 3500-9500 mPa•s at 25°C, the density of the coating is 0.95-1.2 g/cm$^3$, and the elongation at break is greater than or equal to 10%;

preferably, the temperature during the coating of the first resin layer is 32-55°C, and the coating viscosity at this temperature is 1500-3000 mPa•s; the temperature during the coating of the second resin layer is 32-55°C, and the coating viscosity at this temperature is 1500-3000 mPa•s.

**17.** The optical fiber preparation method according to claim 14, wherein the curing form used by the curing unit (5) is UV or LED curing, the curing power is greater than or equal to 300 W, the maximum power concentration area is less than or equal to 0.15 cm$^2$, and the curing time is 0.003-0.02 s.

**18.** A fine-diameter optical fiber, wherein it is prepared by the optical fiber preparation method according to any one of claims 9 to 17.

**19.** The fine-diameter optical fiber according to claim 18, wherein the fine-diameter optical fiber comprises a bare fiber, an inner resin coating layer and an outer resin coating layer from the inside to the outside successively, the diameter of the bare fiber is 80 $\pm$ 1 $\mu$m, the diameter of the bare fiber of which the outside is provided with the inner resin coating layer is 120-135 $\mu$m, the diameter of the optical fiber is 155-170 $\mu$m, and the ratio of the thickness of inner resin coating layer to the thickness of outer resin coating layer is 1:(0.67-1.15).

Fig. 1

Fig. 2

Fig. 3

## INTERNATIONAL SEARCH REPORT

| | International application No. |
|---|---|
| | **PCT/CN2021/123420** |

| A. | CLASSIFICATION OF SUBJECT MATTER |
|---|---|

C03B 37/029(2006.01)i;  C03C 25/105(2018.01)i

According to International Patent Classification (IPC) or to both national classification and IPC

| B. | FIELDS SEARCHED |
|---|---|

Minimum documentation searched (classification system followed by classification symbols)

C03B;C03C

Documentation searched other than minimum documentation to the extent that such documents are included in the fields searched

Electronic data base consulted during the international search (name of data base and, where practicable, search terms used)

CNTXT; CJFD; WPABS; ENTXT; CNTXT; CNKI; ISI: 光学, 纤维, 拉丝, 延伸, 炉, 气, 密封, 气幕, 环, 盘, 通道, 加热, 直径, 涂覆, 涂层, 固化, optical, fiber, drawing, extending, furnace, gas, seal, curtain, ring, plate, passage, heating, diameter, apply, coating, curing

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 113292241 A (ZHONGTIAN TECHNOLOGY OPTICAL FIBER CO., LTD.) 24 August 2021 (2021-08-24) <br> claims 1-19 | 1-19 |
| Y | CN 203212462 U (JIANGSU FASTEN PHOTONICS CO., LTD.) 25 September 2013 (2013-09-25) <br> claim 1, and figures 1 and 2 | 1-19 |
| Y | CN 107555780 A (JIANGSU STERLITE TONGGUANG FIBER CO., LTD.) 09 January 2018 (2018-01-09) <br> claims 1 and 9, and description, paragraph [0002], and figures 1 and 2 | 1-19 |
| Y | CN 111323872 A (ZHONGTIAN TECHNOLOGY PRECISION MATERIALS CO., LTD. et al.) 23 June 2020 (2020-06-23) <br> description, paragraphs [0049] and [0125] | 15, 18, 19 |
| Y | JP S62246837 A (SUMITOMO ELECTRIC INDUSTRIES) 28 October 1987 (1987-10-28) <br> description, page 3, right upper column, left bottom column, right bottom column, page 4, left upper column, and figure 1 | 1-19 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2022** | **25 February 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/123420**

**C.     DOCUMENTS CONSIDERED TO BE RELEVANT**

| Category* | Citation of document, with indication, where appropriate, of the relevant passages | Relevant to claim No. |
|---|---|---|
| Y | CN 205099574 U (CHENGDU SEI OPTICAL FIBER CO., LTD.) 23 March 2016 (2016-03-23)<br>claim 1, and figure 1 | 1-19 |
| Y | CN 112592048 A (TONGDING INTERCONNECTION INFORMATION CO., LTD.) 02 April 2021 (2021-04-02)<br>claims 1-7, and figure 1 | 1-19 |
| Y | US 2005042559 A1 (BIRD, L. A. et al.) 24 February 2005 (2005-02-24)<br>claim 19, and figure 1 | 1-19 |
| Y | JP H07144931 A (FURUKAWA ELECTRIC CO., LTD.) 06 June 1995 (1995-06-06)<br>description, paragraphs [0011]-[0013], and figure 1 | 1-19 |
| A | US 6474109 B1 (PLASMA OPTICAL FIBRE, B.V.) 05 November 2002 (2002-11-05)<br>entire document | 1-19 |
| A | US 2004107736 A1 (CIT ALCATEL) 10 June 2004 (2004-06-10)<br>entire document | 1-19 |

Form PCT/ISA/210 (second sheet) (January 2015)

**INTERNATIONAL SEARCH REPORT**
Information on patent family members

International application No.

**PCT/CN2021/123420**

| Patent document cited in search report | | | Publication date (day/month/year) | Patent family member(s) | | | Publication date (day/month/year) |
|---|---|---|---|---|---|---|---|
| CN | 113292241 | A | 24 August 2021 | None | | | |
| CN | 203212462 | U | 25 September 2013 | None | | | |
| CN | 107555780 | A | 09 January 2018 | None | | | |
| CN | 111323872 | A | 23 June 2020 | WO | 2021164443 | A1 | 26 August 2021 |
| JP | S62246837 | A | 28 October 1987 | None | | | |
| CN | 205099574 | U | 23 March 2016 | None | | | |
| CN | 112592048 | A | 02 April 2021 | None | | | |
| US | 2005042559 | A1 | 24 February 2005 | US | 2003041628 | A1 | 06 March 2003 |
| | | | | WO | 03020654 | A1 | 13 March 2003 |
| JP | H07144931 | A | 06 June 1995 | None | | | |
| US | 6474109 | B1 | 05 November 2002 | AT | 251600 | T | 15 October 2003 |
| | | | | DK | 1101745 | T3 | 29 December 2003 |
| | | | | BR | 0005417 | A | 07 August 2001 |
| | | | | EP | 1101745 | A1 | 23 May 2001 |
| | | | | EP | 1101745 | B1 | 08 October 2003 |
| | | | | CN | 1295985 | A | 23 May 2001 |
| | | | | CN | 1150134 | C | 19 May 2004 |
| | | | | NL | 1013583 | C2 | 17 May 2001 |
| | | | | DE | 60005769 | D1 | 13 November 2003 |
| | | | | DE | 60005769 | T2 | 19 August 2004 |
| US | 2004107736 | A1 | 10 June 2004 | AT | 353315 | T | 15 February 2007 |
| | | | | DE | 60311630 | D1 | 22 March 2007 |
| | | | | DE | 60311630 | T2 | 22 November 2007 |
| | | | | EP | 1428802 | A2 | 16 June 2004 |
| | | | | EP | 1428802 | A3 | 21 July 2004 |
| | | | | EP | 1428802 | B1 | 07 February 2007 |

Form PCT/ISA/210 (patent family annex) (January 2015)